# EUROPÄISCHE PATENTANMELDUNG

(11) **EP 1 508 781 A2**
(43) Veröffentlichungstag der Anmeldung: **23.02.2005**
(21) Anmeldenummer: 04011058.7
(22) Anmeldetag: 10.05.2004
(51) Int. Cl.: G01D 5/20

(54) **Positionsmesssystem für Pneumatikzylinder**

(30) Priorität: 18.08.2003 DE 10338265
(71) Anmelder: BALLUFF GmbH, 73765 Neuhausen (DE)
(72) Erfinder: Jagiella, Manfred, 73274 Notzingen (DE)
(74) Vertreter: HOEGER, STELLRECHT & PARTNER Patentanwälte

(57) **Zusammenfassung**

Es wird ein Positionsmeßsystem vorgeschlagen, welches umfaßt: einen Geber, einen ersten Wegaufnehmer, an welchen der Geber berührungslos koppelt mit einer Kopplungsstärke, welche abhängig ist von der relativen Position zwischen dem ersten Wegaufnehmer und dem Geber, einen zweiten Wegaufnehmer, an dem der Geber berührungslos mit ortsabhängiger Kopplungsstärke koppelt, und eine Fixierungseinrichtung zur Fixierung des ersten Wegaufnehmers und des zweiten Wegaufnehmers relativ zueinander, so daß sich der Meßbereich des Positionsmeßsystems über den ersten Wegaufnehmer und den zweiten Wegaufnehmer erstreckt.

## Beschreibung

Die Erfindung betrifft ein Positionsmeßsystem.

Die Erfindung betrifft ferner einen Pneumatikzylinder.

Aus der DE 100 25 661 A1 oder US 2001 0052771 A1 und DE 101 24 483 A1 oder US 2002 0163328 A1 sind Wegmeßsysteme (Positionsmeßsysteme) mit einem Geber und einem Sensor bekannt, wobei der Geber elektromagnetisch an den Sensor koppelt. Der Sensor umfaßt ein induktives Element, welches wiederum an einen Oszillator gekoppelt ist und über seine Güte und/oder effektive Induktivität diesen Oszillator beeinflußt. Die Güte und/oder effektive Induktivität des induktiven Elements ist dabei bestimmt durch die Größe eines wirksamen Sensorbereichs, an den der Geber koppelt. Der Sensor ist so ausgebildet, daß die Größe des wirksamen Sensorbereichs, an den der Geber koppelt, abhängig ist von der relativen Position zwischen Geber und Sensor quer zu einer Abstandsrichtung zwischen diesen.

Der Erfindung liegt die Aufgabe zugrunde, ein Positionsmeßsystem zu schaffen, welches variabel einsetzbar ist.

Diese Aufgabe wird erfindungsgemäß dadurch gelöst, daß ein Geber vorgesehen ist, ein erster Wegaufnehmer, an welchen der Geber berührungslos koppelt mit einer Kopplungsstärke, welche abhängig ist von der relativen Position zwischen dem ersten Wegaufnehmer und dem Geber, ein zweiter Wegaufnehmer vorgesehen ist, an den der Geber berührungslos mit ortsabhängiger Kopplungsstärke koppelt, und eine Fixierungseinrichtung vorgesehen ist zur Fixierung des ersten Wegaufnehmers und des zweiten Wegaufnehmers relativ zueinander, so daß sich der Meßbereich des Positionsmeßsystems über den ersten Wegaufnehmer und den zweiten Wegaufnehmer erstreckt.

Durch die erfindungsgemäße Lösung läßt sich auf einfache Weise die Meßlänge einstellen und es läßt sich so auf einfache Weise ein ablängbares System bereitstellen. Die Ablängbarkeit kann dabei schnell und insbesondere an einer Anwendung erfolgen. Es ergibt sich dadurch ein zuverlässig arbeitendes System mit hoher Variabilität. Durch eine teleskopartige relative Verschiebung zwischen dem ersten Wegaufnehmer und dem zweiten Wegaufnehmer lassen sich Meßlängen in einem weiten Bereich einstellen. Der Meßbereich ist dabei größer als die jeweilige Meßlänge der einzelnen Wegaufnehmer.

Es hat sich beispielsweise gezeigt, daß bei zwei Wegaufnehmern, welche als sensitive Elemente Spulen mit einer Länge von 18 cm umfassen, sich die Meßlänge bis auf das Doppelte dieser Länge erhöhen läßt, wobei die Monotonie der Kennlinie im ganzen Längenbereich gegeben ist.

Es kann grundsätzlich vorgesehen sein, daß die relative Fixierung der beiden Wegaufnehmer zueinander durch eine getrennte Fixierung an einem weiteren Bauteil erreicht wird. Die beiden Wegaufnehmer können dabei beabstandet sein oder sich vorzugsweise überlappen.

Besonders vorteilhaft ist es, wenn der erste Wegaufnehmer und der zweite Wegaufnehmer durch die Fixierungseinrichtung miteinander fixierbar sind. Dadurch läßt sich insbesondere eine geschlossene unterbrechungsfreie Meßstrecke herstellen.

Insbesondere ist es günstig, wenn der erste Wegaufnehmer und der zweite Wegaufnehmer derart miteinander fixierbar sind, daß der Meßbereich des Positionsmeßsystems einstellbar ist. Durch die relative Position der beiden Wegaufnehmer zueinander ist der Meßbereich bestimmt, wobei dann dieser wiederum einstellbar ist.

Insbesondere sind der erste Wegaufnehmer und der zweite Wegaufnehmer feststellbar verschieblich zueinander, um so einerseits bei eingestellter Fixierung eine zuverlässige und genaue Messung zu ermöglichen und andererseits über die Verschiebung (vor der Messung) den Meßbereich einstellen zu können.

Das erfindungsgemäße Positionsmeßsystem weist eine Ablängbarkeit auf, die durch den Anwender durchführbar ist und durch die Einstellbarkeit der relativen Position und insbesondere der Fixierung zwischen dem ersten Wegaufnehmer und dem zweiten Wegaufnehmer bestimmt ist.

Insbesondere weisen der erste Wegaufnehmer und der zweite Wegaufnehmer einen Überlappungsbereich im Positionsmeßsystem auf. Der Überlappungsbereich ist dadurch definiert, daß dort sowohl der erste Wegaufnehmer als auch der zweite Wegaufnehmer im Kopplungsbereich und insbesondere Feldbeaufschlagungsbereich des Gebers liegen. Über diesen Überlappungsbereich kann sich beispielsweise auch eine einfache Fixierung der beiden Wegaufnehmer miteinander erreichen lassen.

Es ist ferner günstig, wenn die Größe des Überlappungsbereichs einstellbar ist, um so wiederum die Meßlänge einstellen zu können.

Es ist grundsätzlich möglich, daß die Fixierungseinrichtung die beiden Wegaufnehmer formschlüssig relativ zueinander fixiert. Auf einfache Weise läßt sich eine Fixierung erreichen, wenn die Fixierungseinrichtung den ersten Wegaufnehmer und den zweiten Wegaufnehmer kraftschlüssig miteinander fixiert. Ein Anwender kann durch Aufhebung oder Verringerung der Kraft, welche die formschlüssige oder kraftschlüssige Fixierung bewirkt, die beiden Wegaufnehmer relativ zueinander verschieben, um so die Meßlänge einzustellen. Im Falle einer kraftschlüssigen Fixierung müssen dazu keine Schrauben oder dergleichen gelöst werden.

Günstig ist es, wenn die Fixierungseinrichtung den ersten Wegaufnehmer und den zweiten Wegaufnehmer umgreift. Dadurch läßt sich auf einfache Weise eine Fixierung zwischen diesen beiden Wegaufnehmern erreichen.

Eine Fixierung läßt sich auf besonders einfache Weise erreichen, wenn die Fixierungseinrichtung ein elastisches Element wie ein Gummiband oder einen Schrumpfschlauch umfaßt, mittels welchem der erste Wegaufnehmer und der zweite Wegaufnehmer miteinander verklemmbar sind. Dadurch läßt sich eine Fixierung mit minimalem Aufwand erreichen. Insbesondere müssen Trägerplatinen nicht modifiziert werden. Das erfindungsgemäße Positionsmeßsystem läßt sich dann auch kostengünstig herstellen.

Insbesondere ist die Fixierungseinrichtung aus einem elektrisch isolierenden Material hergestellt, damit dieses, wenn es auf eine Trägerplatine wirkt, keinen elektrischen Einfluß hat.

Es kann auch vorgesehen sein, daß die Fixierungseinrichtung so ausgebildet ist, daß sie den ersten Wegaufnehmer hält und/oder den zweiten Wegaufnehmer hält. Die Fixierungseinrichtung kann dann beispielsweise die beiden Wegaufnehmer getrennt halten und so für eine relative Positionierung der beiden Wegaufnehmer zueinander sorgen. Sie kann auch nur einen Wegaufnehmer halten, wobei der zweite Wegaufnehmer dann durch eine Fixierungseinrichtung gehalten wird, welche den ersten Wegaufnehmer mit dem zweiten Wegaufnehmer fixiert.

Beispielsweise umfaßt die Fixierungseinrichtung ein Gehäuse, welches ablängbar sein kann, in dem der erste Wegaufnehmer und/oder der zweite Wegaufnehmer gehalten ist. Insbesondere ist dann mindestens ein Wegaufnehmer in dem Gehäuse verschieblich. Das Gehäuse sorgt für die relative Positionierung der beiden Wegaufnehmer. Es kann zusätzlich eine Fixierungseinrichtung wie das oben erwähnte Gummiband vorgesehen sein, um beide Wegaufnehmer direkt miteinander zu fixieren.

Es ist auch möglich, daß die Fixierungseinrichtung mindestens eine Ausnehmung im Gehäuse zum Halten eines Wegaufnehmers umfaßt. Beispielsweise ist die Ausnehmung nutförmig oder rillenförmig ausgebildet. In einer solchen Ausnehmung läßt sich dann ein Wegaufnehmer positionieren und dort in der Ausnehmung auch fixieren, beispielsweise durch Klemmung. Bei entsprechend angepaßter Ausbildung von Ausnehmung und Wegaufnehmer läßt es sich beispielsweise erreichen, daß der Wegaufnehmer nicht über eine Gehäuseoberfläche hinausragt. Ein solcher Wegaufnehmer läßt sich dann bündig bezüglich der Gehäuseoberfläche anordnen oder sich gegenüber dieser zurückgesetzt anordnen.

Bei einer Ausführungsform umfaßt die Fixierungseinrichtung eine erste Ausnehmung an einem Gehäuse zum Halten des ersten Wegaufnehmers und eine zweite Ausnehmung an dem Gehäuse zum Halten des zweiten Wegaufnehmers. Bei entsprechender Positionierung der beiden Wegaufnehmer relativ zueinander läßt sich ein Überlappungsbereich einstellen, in dem sich die beiden Wegaufnehmer gemeinsam beispielsweise durch ein Gebermagnetfeld beaufschlagen lassen.

Insbesondere sind die erste Ausnehmung und die zweite Ausnehmung parallel angeordnet, so daß der meßbare Wegbereich auf einfache Weise einstellbar ist.

Es ist günstig, wenn die mindestens eine Ausnehmung als Nut ausgebildet ist, in welcher der zugeordnete Wegaufnehmer fixierbar ist. Dadurch läßt sich auf einfache Weise das erfindungsgemäße Positionsmeßsystem in ein Gehäuse integrieren.

Insbesondere sind die mindestens eine Ausnehmung und der zugeordnete Wegaufnehmer so aneinander angepaßt ausgebildet, daß der Wegaufnehmer in der Ausnehmung vor der Fixierung längsverschieblich ist. Dadurch läßt sich ein Überlappungsbereich auf einfache Weise einstellen. Es ist dann auch auf einfache Weise erreichbar (bei entsprechender Ausgestaltung eines Gehäuses des Wegaufnehmers und der Ausnehmung), daß der Wegaufnehmer nur in der Längsrichtung verschieblich ist, d. h. nicht von oben aus der Ausnehmung genommen werden kann. Eine Fixierung läßt sich dadurch auf einfache Weise erreichen, da nur die Längsverschieblichkeit gesperrt werden muß.

Beispielsweise ist der zweite Wegaufnehmer auf dem ersten Wegaufnehmer positioniert. Dadurch läßt sich auf einfache Weise eine Fixierung erreichen.

Eine Einstellbarkeit der Meßlänge läßt sich dann auf einfache Weise erreichen, wenn eine Längsachse des ersten Wegaufnehmers und eine Längsachse des zweiten Wegaufnehmers parallel sind. Dadurch läßt sich die Meßlänge vergrößern oder verkleinern, ohne daß die Kennlinie bezüglich ihrer Monotonie beeinflußt wird. Die Längsachse der Wegaufnehmer fällt dabei vorzugsweise im wesentlichen zusammen mit der Bewegungsrichtung des Gebers.

Ganz besonders vorteilhaft ist es, wenn der erste Wegaufnehmer und der zweite Wegaufnehmer jeweils ein oder mehrere sensitive Elemente umfassen, welche örtlich variierend ausgebildet sind. Die Ortsinformation zur Bestimmung der Position des Gebers ist dann in dem sensitiven Element entsprechend kodiert, beispielsweise in der geometrischen Ausgestaltung des sensitiven Elements. Ein entsprechendes Wegmeßsystem ist in der DE 100 25 661 A1 bzw. US 2001 0052771 A1 beschrieben, auf die ausdrücklich Bezug genommen wird.

Es ist dann günstig, wenn der erste Wegaufnehmer und der zweite Wegaufnehmer jeweils einen wirksamen Sensorbereich aufweisen, welcher quer zu einer Abstandsrichtung zwischen dem Geber und dem jeweiligen Wegaufnehmer variiert. Ein entsprechend Wegaufnehmer läßt sich auf einfache Weise ausgestalten, indem beispielsweise eine Flachspule einer entsprechenden geometrischen Gestalt auf einer Platine angeordnet wird. Beispielsweise hat die Spule eine dreieckförmige Gestalt, so daß ihre Breite quer zu einer Längsrichtung variiert von einem großen Wert an einem Ende der Spule zu einem kleinen Wert an einer Dreieckspitze. Die Änderung ist monoton, wodurch sich mindestens für einen einzelnen Wegaufnehmer eine im wesentlichen lineare Kennlinie für die Ortsabhängigkeit erreichen läßt.

Der wirksame Sensorbereich variiert dabei insbesondere quer zu einer Längsrichtung des jeweiligen Wegaufnehmers, so daß sich bei unterschiedlichen Positionen des Gebers entlang der Längsrichtung unterschiedliche wirksame Sensorbereiche ergeben, wodurch sich wiederum unterschiedliche Sensorsignale ergeben und dadurch die Position des Gebers längs dieser Längsrichtung bestimmbar ist.

Bei einem bevorzugten Beispiel umfassen der erste Wegaufnehmer und der zweite Wegaufnehmer jeweils mindestens ein induktives Element als sensitives Element. Das induktive Element ist dabei vorzugsweise an einen Oszillator gekoppelt und über die Güte und/oder effektive Induktivität beeinflußt das induktive Element den Oszillator. Die Wirkungsweise solcher induktiver Elemente ist in der DE 100 25 661 A1 bzw. US 2001 0052771 A1 beschrieben, auf die ausdrücklich Bezug genommen wird.

Besonders vorteilhaft ist es, wenn das mindestens eine induktive Element als Flachspule auf einem Träger angeordnet ist. Dadurch lassen sich die Höhenabmessungen des sensitiven Elements gering halten. Dadurch wiederum wird erreicht, daß der Höhenabstand des Gebers zu dem sensitiven Element des ersten Wegaufnehmers und zu dem sensitiven Element des zweiten Wegaufnehmers nur um eine kleine und für die Messung unwesentliche Distanz abweicht.

Günstig ist es, wenn der Träger eine Platine umfaßt, welche insbesondere plättchenförmig ausgebildet ist. Es ist dann möglich, die beiden Wegaufnehmer auf einfache Weise miteinander zu fixieren und gegeneinander zu verschieben. Der Träger kann dabei vollständig flexibel ausgebildet sein oder zumindest teilweise flexibel ausgebildet sein. Insbesondere kann der Träger ein starres Trägerteil und eine oder mehrere flexible Trägerteile umfassen, welche an dem starren Trägerteil angeordnet sind. Ein solches Positionsmeßsystem ist in der DE 101 24 483 A1 oder US 2002 0163328 A1 beschrieben, auf die ausdrücklich Bezug genommen wird.

Bei flexiblen Trägern ist der Träger beispielsweise gefaltet, gebogen oder gerollt. Es läßt sich dadurch ein Träger mit geringen Querabmessungen ausbilden, um so wiederum einen Wegaufnehmer mit kleinen Querabmessungen bereitstellen zu können. Ein solcher Wegaufnehmer läßt sich beispielsweise in einer Nut positionieren.

Es kann vorgesehen sein, daß das mindestens eine induktive Element dreieckförmig ausgebildet ist. Dadurch läßt sich auf einfache Weise eine Ortsabhängigkeit des wirksamen Sensorbereichs einstellen und insbesondere eine monotone Ortsabhängigkeit.

Es ist dann insbesondere günstig, wenn der erste Wegaufnehmer und der zweite Wegaufnehmer im Bereich von Dreieckspitzen ihrer jeweiligen induktiven Elemente überlappen.

Der erste Wegaufnehmer und der zweite Wegaufnehmer sind vorzugsweise so relativ zueinander fixiert, daß ihre jeweiligen induktiven Elemente einander zugewandt sind. Damit ist der Höhenabstand zwischen den induktiven Elementen minimiert, so daß auch der Unterschied im Höhenabstand zu einem Geber minimiert ist.

Günstigerweise ist zwischen den induktiven Elementen verschiedener Wegaufnehmer mindestens eine elektrische Isolierungsschicht angeordnet, um einen elektrischen Kontakt der induktiven Elemente zu verhindern.

Bei einer weiteren Ausführungsform eines erfindungsgemäßen Positionsmeßsystems ist ein weichmagnetischer Kern vorgesehen, um welchen mindestens eine Meßspule gewickelt ist. Insbesondere ist eine Referenzspule in Reihe gekoppelt, wobei die (mindestens eine) Meßspule, welche um den weichmagnetischen Kern gewickelt ist, in einen Schwingkreis integriert. Es kann auch vorgesehen sein, daß die mindestens eine Meßspule in einer Brückenschaltung angeordnet ist, die durch eine externe Anregung beaufschlagt wird.

Der weichmagnetische Kern weist eine definierte Magnetisierung auf. Wenn als Geber ein bezogen auf die Meßspule axial magnetisierter Magnet verwendet wird, dann beeinflußt dieser die Magnetisierung und dieser Einfluß wiederum beeinflußt den Schwingkreis bzw. die Brückenschaltung in Dämpfung, Phase und Frequenz. Wenn der weichmagnetische Kern langgestreckt ist, dann ist diese Beeinflussung abhängig von der Position des Gebers relativ zu dem weichmagnetischen Kern, so daß über die Beeinflussung die Positionsinformation bezüglich des Gebers erhalten werden kann.

Insbesondere ist der weichmagnetische Kern mehrteilig ausgebildet mit mindestens einem ersten Kernelement als erstem Wegaufnehmer und einem zweiten Kernelement als zweitem Wegaufnehmer, wobei die Kernelemente relativ zueinander positionierbar sind. Die Kernelemente wirken mindestens in Kombination mit der Meßspule als Wegaufnehmer. Durch eine Ablängbarkeit des weichmagnetischen Kerns, insbesondere durch die relative Positionierung der beiden Kernteile zueinander, läßt sich der Meßbereich einstellen. Die Meßspule wird dann so gewählt, daß sie den gesamten Kern (welcher sich aus den Kernteilen zusammensetzt) umgibt.

Eine Auswerteelektronik kann zumindest teilweise auf einem Träger für ein sensitives Element angeordnet sein oder außerhalb eines solchen Trägers angeordnet sein.

Insbesondere wenn der Geber ein Magnet ist, ist es vorteilhaft, wenn mindestens ein Wegaufnehmer mit magnetisch sättigbarem Material versehen ist und beispielsweise mit einer magnetisch sättigbaren Schicht versehen ist, wie einer Mu-Metallschicht.

Wenn die magnetisch sättigbare Schicht aus einem elektrisch leitenden Material hergestellt, wie beispielsweise Mu-Metall, ergibt sich auch eine gute Abschirmwirkung gegenüber elektromagnetischen Störungen.

Die magnetisch sättigbare Schicht kann mittels einer Folie gebildet sein und insbesondere mittels einer selbstklebenden Folie. Dadurch läßt sich die Aufbringung der magnetischen Schicht auf den Träger vereinfachen. Die magnetische Schicht kann dabei einseitig oder zweiseitig angeordnet sein.

Die magnetisch sättigbare Schicht kann auf einer dem anderen Wegaufnehmer zugewandten Seite und/oder abgewandten Seite angeordnet sein.

Es ist auch möglich, daß ein Träger auf der dem anderen Wegaufnehmer abgewandten Seite mit einer Metallschicht versehen ist und insbesondere kupferkaschiert ist. Dadurch ergibt sich eine gute Abschirmwirkung bei einfacher und kostengünstiger Herstellbarkeit.

Es kann auch vorgesehen sein, daß das mindestens eine induktive Element aus einem magnetisch leitenden oder elektrisch leitenden Material hergestellt ist. Es läßt sich dann direkt an dem sensitiven Element eine magnetische Sättigung erzielen, wobei eben über die lokale Sättigung die ortsabhängige Information erhalten wird.

Es kann auch vorgesehen sein, daß zusätzlich zu dem ersten Wegaufnehmer und dem zweiten Wegaufnehmer mindestens ein weiterer Wegaufnehmer mit einem benachbarten Wegaufnehmer fixiert ist. Dadurch ergibt sich eine weitere Einstellmöglichkeit für den Längenmeßbereich.

Günstig ist es, wenn ein Halter zur Fixierung des Positionsmeßsystems an einer Anwendung wie beispielsweise einem Pneumatikzylinder vorgesehen ist.

Der Halter ist beispielsweise dazu ausgebildet, Sensoren an einer Funktionseinheit zu halten. Solch ein Halter, welcher universell einsetzbar ist, ist in der DE 100 38 001 A1 oder US 2002 0014128 A1 beschrieben, auf die ausdrücklich Bezug genommen wird.

Insbesondere ist dann ein Adapter für das Positionsmeßsystem vorgesehen, mittels welchem dieses sich an dem Halter fixieren läßt. Dadurch kann das Positionsmeßsystem auf einfache Weise an einer Vielzahl von Funktionseinheiten fixiert werden.

Das Positionsmeßsystem kann dabei über die Fixierungseinrichtung an dem Halter fixierbar sein, wobei dann die Fixierungseinrichtung beispielsweise an dem Adapter fixierbar ist. Es ist auch möglich, daß das Positionsmeßsystem über einen Wegaufnehmer an dem Halter fixierbar ist, wobei dann der Wegaufnehmer direkt an dem Adapter fixiert ist.

Das erfindungsgemäße Positionsmeßsystem läßt sich auf vorteilhafte Weise bei der Positionsmessung für einen Pneumatikzylinder verwenden.

Die Erfindung betrifft ferner einen Pneumatikzylinder, wobei dieser mit dem erfindungsgemäßen Positionsmeßsystem versehen ist.

Bei Pneumatikzylindern muß oftmals das Erreichen von bestimmten Schaltpositionen eines Kolbens oder die Kolbenbewegung detektiert werden. Es existieren viele verschiedene Bauarten von Pneumatikzylindern mit insbesondere unterschiedlichen Gehäuselängen. Durch das erfindungsgemäße Positionsmeßsystem mit einstellbarem Meßbereich können Pneumatikzylinder auf einfache Weise mit einem Positionsmeßsystem ausgerüstet werden.

Beispielsweise ist das Positionsmeßsystem an einem Gehäuse des Pneumatikzylinders angeordnet und dabei insbesondere in einer Nut in einer Gehäusewand angeordnet. Ein Benutzer kann Schaltpunkte auf einfache Weise programmieren, da das erfindungsgemäße Positionsmeßsystem eine absolute Positionsmessung durchführen kann und über die absolute Positionsmessung sich Schaltpunkte festlegen lassen.

Es ist auch möglich, das erfindungsgemäße Positionsmeßsystem innerhalb eines Gehäuses des Pneumatikzylinders anzuordnen.

Die nachfolgende Beschreibung bevorzugter Ausführungsformen dient im Zusammenhang mit der Zeichnung der näheren Erläuterung der Erfindung. Es zeigen:
- Figur 1: eine Schnittansicht eines Ausführungsbeispiels eines erfindungsgemäßen Positionsmeßsystems;
- Figur 2: eine seitliche Schnittansicht des Positionsmeßsystems gemäß Figur 2;
- Figur 3: Meßdiagramme für die Ausgangsspannung in Volt über der Wegstrecke eines Gebers für das Positionsmeßsystem gemäß den Figuren 1 und 2 bei unterschiedlichen Überlappungen;
- Figur 4: schematisch einen Pneumatikzylinder, welcher mit einem erfindungsgemäßen Positionsmeßsystem versehen ist;
- Figur 5: eine Seitenansicht des Pneumatikzylinders gemäß Figur 3;
- Figur 6: ein Pneumatikzylinder in perspektivischer Darstellung, bei dem über einen Halter ein erfindungsgemäßes Positionsmeßsystem fixierbar ist;
- Figur 7: ein weiteres Beispiel eines Pneumatikzylinders mit Fixierungseinrichtung;
- Figur 8: ein weiteres Beispiel eines Pneumatikzylinders mit fixierter Fixierungseinrichtung;
- Figur 9: ein zweites Ausführungsbeispiel eines erfindungsgemäßen Positionsmeßsystems in schematischer Darstellung;
- Figur 10: ein drittes Ausführungsbeispiel eines erfindungsgemäßen Positionsmeßsystems;
- Figur 11: eine schematische Schnittansicht eines Wegaufnehmers mit gefaltetem flexiblen Träger und
- Figur 12: eine schematische Schnittansicht eines Wegaufnehmers mit flexiblem Träger, welcher gerollt ist.

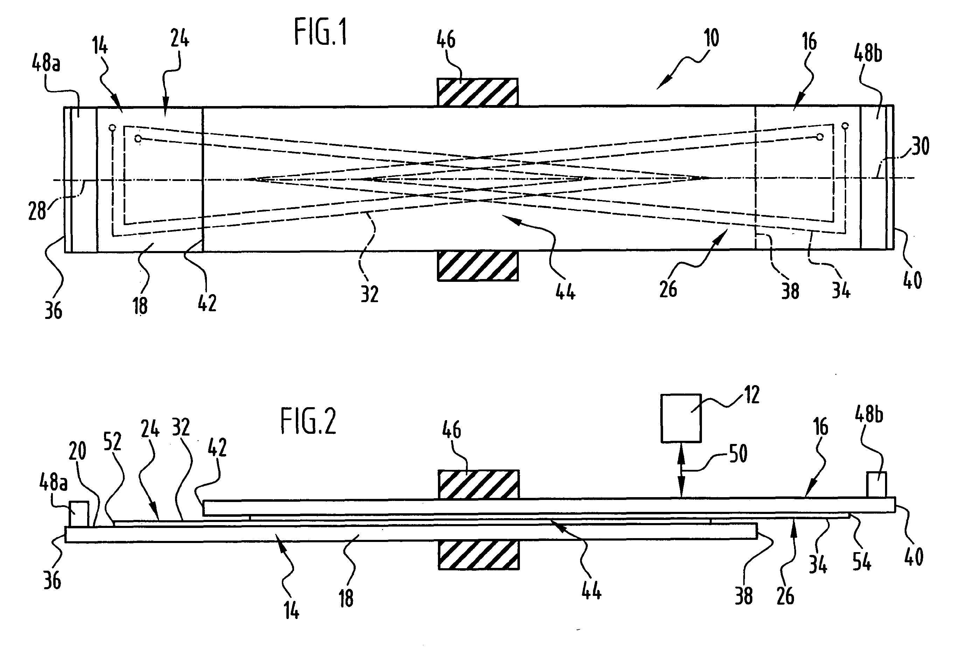

Ein erstes Ausführungsbeispiel eines erfindungsgemäßen Positionsmeßsystems, welches in Figur 1 und 2 gezeigt und dort als Ganzes mit 10 bezeichnet ist, umfaßt einen Geber 12 (Figur 2), bei dem es sich insbesondere um einen Magneten handelt, wie beispielsweise einen Dauermagneten oder einen Elektromagneten.

Bei dem Geber 12 kann es sich auch um einen metallischen Körper handeln, welcher induktiv an einen Sensor koppelt.

Der Geber 12 ist an ein bewegliches Objekt gekoppelt, dessen Position festgestellt werden soll. Beispielsweise ist der Geber an einen Kolben eines Pneumatikzylinders gekoppelt.

Das Positionsmeßsystem 10 umfaßt einen ersten Wegaufnehmer 14 und einen zweiten Wegaufnehmer 16. Die beiden Wegaufnehmer 14 und 16 weisen einen ähnlichen Aufbau auf und können sogar identisch aufgebaut sein.

Die beiden Wegaufnehmer 14 und 16 sind insbesondere so ausgebildet, daß sie für sich jeweils vollständig funktionsfähig sind, d. h. daß sich über sie Positionsdaten eines Gebers 12, welcher in einem Abstand über dem jeweiligen Wegaufnehmer 14 bzw. 16 positioniert ist, ermitteln lassen.

Die Wegaufnehmer 14, 16 umfassen jeweils eine Platine 18 als Träger. Diese Platine 18 ist vorzugsweise plättchenförmig ausgebildet mit einer Oberseite 20 und einer Unterseite 22, welche im wesentlichen parallel zueinander sind.

Auf der Platine 18 sind für die beiden Wegaufnehmer 14, 16 jeweils Sensoren angeordnet, nämlich ein Sensor 24 für den ersten Wegaufnehmer und ein Sensor 26 für den zweiten Wegaufnehmer. Die Sensoren 24, 26 sind räumlich variierend ausgebildet derart, daß die relative Position des Gebers 12 in einer Längsrichtung 28 des ersten Wegaufnehmers 14 bzw. einer Längsrichtung 30 des zweiten Wegaufnehmers 16 durch einen räumlich variierenden Sensorbereich bestimmt ist, welcher eine räumlich variierende Kopplungsstärke längs der Längsrichtungen 28 bzw. 30 verursacht, und zwar auch bei gleichbleibendem Abstand des Gebers 12 über den Wegaufnehmern 14, 16.

Beispielsweise umfassen die Sensoren 24, 26 als sensitive Elemente jeweils Spulen 32, 34, welche auf die zugeordnete Platine 18 aufgebracht sind. Bei dem in Figur 1 gezeigten Ausführungsbeispiel sind die Spulen 32, 34 als induktive Elemente dreieckförmig ausgestaltet und insbesondere als Printspulen auf der jeweiligen Platine 18 angeordnet.

Die Spule 32 weist in ihrer Längsrichtung 28 in ihrer Querabmessung eine variierende Gestalt auf, so daß der wirksame Sensorbereich ausgehend von einem ersten Ende 36 zu einem zweiten Ende 38 der Platine 18 abnimmt und insbesondere monoton abnimmt. Auf die gleiche Weise nimmt der wirksame Sensorbereich für die Spule 34 des zweiten Wegaufnehmers 16 von einem ersten Ende 40 zu einem gegenüberliegenden zweiten Ende 42 hin ab und insbesondere monoton ab.

Die beiden Wegaufnehmer 14 und 16 sind derart überlappend aneinander positioniert, daß das Ende 36 des ersten Wegaufnehmers 14 und das Ende 40 des zweiten Wegaufnehmers 16 abgewandt sind. Die Spule 34 als sensitives Element des zweiten Wegaufnehmers 16 weist zu der Spule 32 des ersten Wegaufnehmers 14 hin. In einem Überlappungsbereich 44 überlappen sich die beiden Wegaufnehmer 14, 16 mit ihren Spulen 32, 34. In diesem Bereich liegt der zweite Wegaufnehmer 16 auf dem ersten Wegaufnehmer 14.

Es ist eine Fixierungseinrichtung 46 vorgesehen, welche die beiden Wegaufnehmer 14 und 16 miteinander fixiert. Diese Fixierungseinrichtung 46 ist dabei so ausgebildet, daß sie die beiden Wegaufnehmer 14, 16 umgreift und klemmend aneinander hält. Die Fixierungseinrichtung 46 läßt dabei (bei Aufhebung der Klemmwirkung) eine Verschiebung der beiden Wegaufnehmer 14, 16 relativ zueinander zu, um die Größe des Überlappungsbereichs 44 und dadurch wiederum den Abstand zwischen den Enden 36 und 40 einzustellen. Auf diese Weise wird wiederum die Meßlänge des Positionsmeßsystems 10 eingestellt. Eine bestimmte relative Position zwischen den beiden Wegaufnehmern 14 und 16 wird durch die Fixierungseinrichtung 46 festgelegt.

Bei einem Ausführungsbeispiel ist die Fixierungseinrichtung 46 durch ein elastisches Band wie ein Schrumpfband gebildet, welche die beiden Wegaufnehmer 14 und 16 in dem Überlappungsbereich 44 miteinander verspannt und diese so aneinander fixiert. Durch entsprechende (elastische) Dehnung der Fixierungseinrichtung 46 kann auf einfache Weise die relative Position zwischen dem ersten Wegaufnehmer 14 und dem zweiten Wegaufnehmer 16 verändert werden.

Zur Auswertung von ermittelten Positionsdaten kann eine Auswerteelektronik 48a, 48b auf den Platinen 18 der jeweiligen Wegaufnehmer 14, 16 angeordnet sein.

Es ist auch möglich, daß die Auswerteelektronik außerhalb dieser Platinen angeordnet ist.

Die Spulen 32, 34 sind als Flachspulen ausgebildet. Sie sind insbesondere als induktives Element an einen Oszillator gekoppelt, wobei die Ankopplung des Gebers 12 dann die Güte und/oder effektive Induktivität des Oszillators beeinflußt, wobei die Güte und/oder effektive Induktivität der Spulen 32, 34 wiederum durch die Position des Gebers 12 in der Längsrichtung 28, 30 beeinflußt ist. Die Längsrichtungen 28, 30 sind quer und insbesondere senkrecht zu einer Abstandsrichtung 50 zwischen dem Geber 12 und den Wegaufnehmern 14, 16.

Der Oszillator kann selbsterregt sein oder fremderregt sein, indem er beispielsweise extern pulsförmig erregt wird. Die Spulen können auch in einer Brückenschaltung angeordnet sein, die durch eine externe Anregung beaufschlagt wird.

Die Ortsinformation bezüglich der relativen Positionierung zwischen dem Sensor 24 bzw. 26 und dem Geber 12 liegt in der geometrischen Struktur der Spule 32 bzw. 34 und in der relativen Positionierung zwischen der Spule 32 bzw. 34 und dem Geber 12. Ein wirksamer Sensorbereich, an welchen der Geber 12 gekoppelt ist, variiert längs einer Meßrichtung, welche im wesentlichen der Längsrichtung 28 bzw. 30 entspricht. Ein Wegmeßsystem dieser Art ist in der DE 100 25 661 A1 oder US 2001 0052771 A1 beschrieben, auf die ausdrücklich Bezug genommen wird.

Die Ortsinformation wird direkt über die effektive Induktivität der Spule 32 bzw. 34 und/oder die Güteänderung ausgelesen. Die Güteänderung läßt sich auf einfache Weise beispielsweise über die Amplitude oder die Frequenz eines Oszillators bestimmen, an den die Spulen 32, 34 gekoppelt sind.

Durch eine entsprechende Strukturierung der Spule 32 bzw. 34 bezüglich deren Länge, deren Windungszahl und deren Formgebung läßt sich die Meßbereichslänge, die Meßgenauigkeit und die Meßauflösung beeinflussen.

Erfindungsgemäß sind der erste Wegaufnehmer 14 und der zweite Wegaufnehmer 16 über die Fixierungseinrichtung 46 miteinander fixiert mit einem Überlappungsbereich 44. Dadurch ergibt sich eine Meßlänge, welche sich über den ersten Wegaufnehmer 14 und den zweiten Wegaufnehmer 16 erstreckt und insbesondere durch den Abstand von abgewandten Enden 52 und 54 der Spulen 32, 34 bestimmt ist. Diese Meßlänge ist auf einfache Weise einstellbar, indem eben der Überlappungsbereich 44 vergrößert oder verkleinert wird. Die Einstellung der Meßlänge läßt sich auf einfache Weise über die Fixierungseinrichtung 46 erreichen.

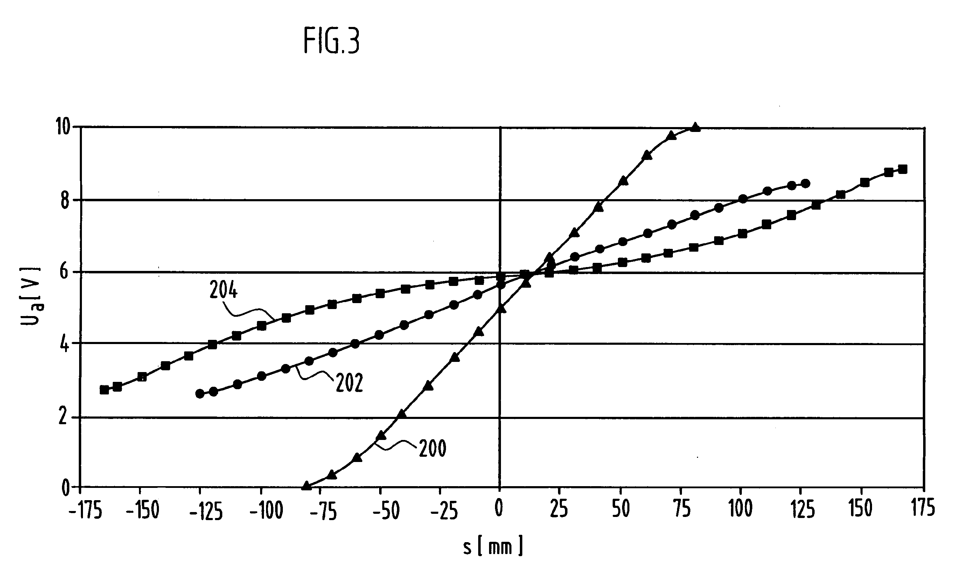

In Figur 3 sind Meßdiagramme für das Positionsmeßsystem 10 bei verschieden großen Überlappungsbereichen 44 gezeigt. Es ist dabei die Ausgangsspannung Ua über der Position s des Gebers aufgetragen. Die Position s = 0 entspricht der Mitte des Positionsmeßsystems 10 bezogen auf die Längsrichtungen 28, 30. Die Meßpunkte wurden für ein Positionsmeßsystem aufgenommen, bei dem die Spulen 32, 34 in der Längsrichtung 28 eine Länge von 18 cm aufweisen. Die Meßkurve 200 wurde erhalten, wenn eine volle Überlappung vorliegt. Der Meßbereich hat einen Umfang von ca. 16 cm, was im wesentlichen der Länge der Spulen 32, 34 bis auf einen Randbereich entspricht. Es kann dabei vorgesehen sein, daß die Platinen 18 als Träger ein starres Trägerteil und einen oder mehrere flexible Trägerteile umfassen, welche an dem starren Trägerteil angeordnet sind. Der Randbereich der Spulen 32, 34 liegt dann im flexiblen Trägerteil und dieses läßt sich wegbiegen, so daß die End-Randbereiche der Spulen 32, 34 außerhalb des Meßfeldes liegen. Ein derartiges Positionsmeßsystem ist in der DE 101 24 483 A1 oder US 2002 0163328 A1 beschrieben, auf die ausdrücklich Bezug genommen wird.

Man erkennt aus der Meßkurve 200, daß das Ausgangssignal im Meßbereich im wesentlichen linear ist.

Die Meßkurve 202 ist genommen worden für das Positionsmeßsystem gemäß den Figuren 1 und 2, wobei eine Überlappung von 13,2 cm vorlag, das heißt der Überlappungsbereich 44 weist eine Ausdehnung von 13,2 cm in der Längsrichtung 28 auf. Es ergibt sich dadurch ein vergrößerter Meßbereich (im Vergleich zu der Meßkurve 200) von 25 cm. Man erkennt auch hier noch ein annähernd lineares Verhalten.

Die Meßkurve 204 wurde für das gleiche System erhalten, wobei jetzt eine Überlappung von 5 cm vorliegt. Der Meßbereich beträgt jetzt 34 cm. Die Meßkurve 204 verläuft monoton.

Man erkennt anhand der Meßkurven 200, 202 und 204, daß durch Einstellung des Überlappungsbereichs 44 der Meßbereich eingestellt werden kann. Die Meßkurven 200, 202, 204 verlaufen monoton, so daß einem Spannungsausgangssignal eindeutig eine Position des Gebers 12 zugeordnet werden kann.

Durch das erfindungsgemäße Positionsmeßsystem ist es möglich, den Ort des Gebers 12 in einem einstellbaren Meßbereich zu ermitteln. Es ist auch möglich, Schaltpunkte zu programmieren, da die Meßkurven für jeden einstellbaren Meßbereich monoton verlaufen. Dadurch kann festgestellt werden, ob und gegebenenfalls wann ein Geber 12 eine bestimmte Position erreicht oder erreicht hat. Soll beispielsweise für den eingestellten Meßbereich 34 cm (Meßkurve 204 in Figur 3) der Ort mit s = -10 cm als Schaltpunkt eingestellt werden, dann muß darauf überwacht werden, ob die Ausgangsspannung einen Wert von 4,4 Volt erreicht. Erhält man diesen Wert der Ausgangsspannung, dann zeigt dies an, daß der Schaltpunkt durch den Geber 12 erreicht wurde.

Es ist grundsätzlich möglich, durch Formgebung der Spulen 32, 34 die Form des Meßsignals zu beeinflussen.

Erfindungsgemäß wird ein einfaches ablängbares Positionsmeßsystem bereitgestellt, mittels welchem sich auf einfache Weise ein Meßlängenbereich in weitem Umfange einstellen läßt.

Zur Vermeidung eines elektrischen Kurzschlusses, wenn die Spulen 32, 34 übereinander liegen, ist eine Isolierungsschicht vorgesehen. Es kann dabei eine Isolierungsschicht entweder auf der Spule 32 oder auf der Spule 34 angeordnet sein oder auf beiden Spulen jeweils eine solche Isolierschicht.

Wenn der Geber 12 ein Magnet ist, dann ist es vorteilhaft, wenn mindestens einer der Wegaufnehmer 14, 16 mit einer Schicht mit einem magnetisch sättigbaren Material versehen ist und beispielsweise mit einer Folie aus einem solchen Material versehen ist. Bei der Verwendung eines elektrisch leitfähigen Materials (auf dem dann eine entsprechende Isolierschicht angeordnet ist) ergibt sich auch noch eine gute Abschirmwirkung gegenüber elektromagnetischen Störeinflüssen. Beispielsweise wird eine selbstklebende Mu-Metallfolie oder Vitrovac-Folie verwendet.

Es ist dabei möglich, daß die Schicht aus magnetisch sättigbarem Material nur entweder an dem ersten Wegaufnehmer 14 oder dem zweiten Wegaufnehmer 16 angeordnet ist und dann vorzugsweise an derjenigen Seite des Wegaufnehmers, welcher dem anderen Wegaufnehmer zugewandt ist.

Es ist auch möglich, daß jeder Wegaufnehmer 14, 16 beispielsweise an seiner Unterseite 22 mit einer solchen Schicht aus einem magnetisch sättigbaren Material versehen ist.

Grundsätzlich ist es auch möglich, daß beide Wegaufnehmer 14, 16 an ihrer Unterseite 22 mit einer solchen Schicht versehen sind und dann noch eine weitere Schicht an der Oberseite 20 vorgesehen ist, wobei dann beide Wegaufnehmer 14, 16 mit einer solchen weiteren Schicht versehen sein können oder nur einer der beiden Wegaufnehmer.

Im Falle, daß auf der Unterseite 22 keine Schicht aus einem magnetisch sättigbaren Material vorgesehen ist, kann hier eine Schicht aus einem metallischen Material und insbesondere eine Kupferkaschierung vorgesehen sein, um die Abschirmwirkung zu erhöhen.

Es ist auch möglich, daß die Spulen 32, 34 aus einem magnetisch leitfähigen und elektrisch leitfähigen Material hergestellt sind; beispielsweise sind die Spulen aus Mu-Metall hergestellt.

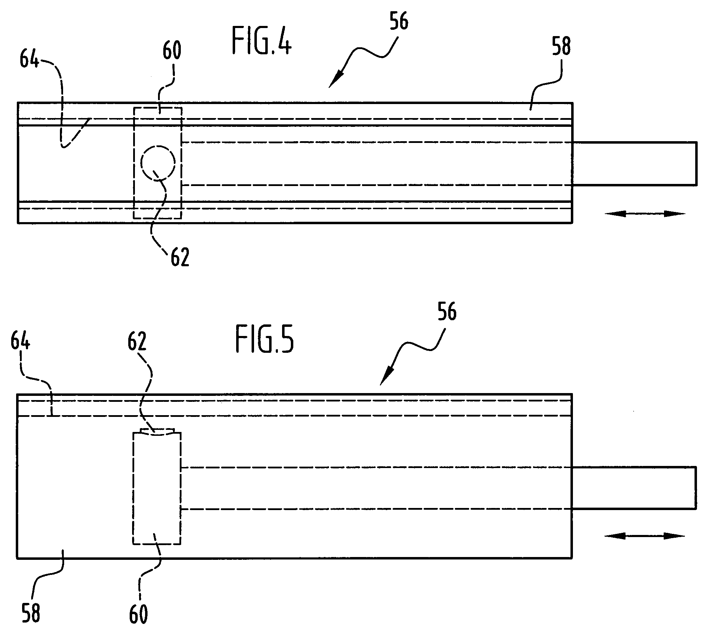

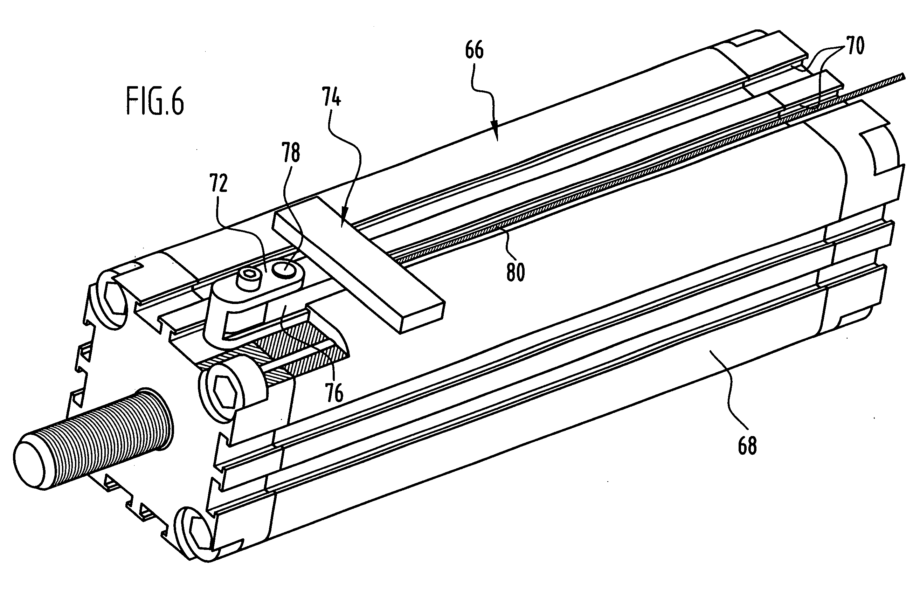

Das erfindungsgemäße Positionsmeßsystem läßt sich vorteilhaft einsetzen bei einem Pneumatikzylinder, wobei ein Pneumatikzylinder in den Figuren 4 und 5 schematisch gezeigt und dort als Ganzes mit 56 bezeichnet ist. Ein solcher Pneumatikzylinder umfaßt ein Gehäuse 58, in welchem ein Kolben 60 linear verschieblich ist. Der Kolben 60 ist mit einem Magneten 62 als Geber versehen.

Das Gehäuse 58 weist an seiner Außenseite eine Nut 64 auf, in die sich das erfindungsgemäße Positionsmeßsystem 10 oder ein Halter für dieses einsetzen läßt. Es kann dabei die Meßlänge eingestellt werden, so daß es möglich ist, mit einem Typ von Positionsmeßsystem 10 Pneumatikzylinder 56 unterschiedlicher Gehäuselängen mit dem Positionsmeßsystem zu versehen.

Es ist auch grundsätzlich möglich, daß das erfindungsgemäße Positionsmeßsystem 10 innerhalb des Gehäuses 58 angeordnet ist.

Bei einem in Figur 6 gezeigten Ausführungsbeispiel umfaßt ein Pneumatikzylinder 66 ein Gehäuse 68 mit mindestens einer Nut 70. In der Nut ist ein Halter 72 fixierbar. Der Halter 72 hält ein erfindungsgemäßes Positionsmeßsystem 74. Dieses ist über einen Adapter 76 an dem Halter 72 fixiert. Der Adapter 76 wiederum kann an der Fixierungseinrichtung 46 oder einem Wegaufnehmer 14 bzw. 16 fixiert sein.

Vorzugsweise ist es vorgesehen, daß der Halter in eine in Längsrichtung auf den Adapter 76 folgende Position bringbar ist und in dieser Position mittels einem oder mehreren Formschlußelementen 78 lösbar verbindbar ist. Das Positionsmeßsystem 74 ist dann über den Halter 72 an dem Pneumatikzylinder 66 als Funktionseinheit fixierbar. Eine solche Sensoranordnung mit Halter ist in der DE 100 38 001 A1 beschrieben, auf die ausdrücklich Bezug genommen wird.

Ein Kabel 80, welches an den Adapter 76 gekoppelt ist, ist in der Nut 70 geführt. Über dieses Kabel 80 läßt sich das Positionsmeßsystem 74 mit elektrischer Energie versorgen und es lassen sich Meßsignale auskoppeln. Der Adapter 76 ist vorzugsweise so ausgebildet, daß er nicht nur mechanisch sondern auch elektrisch an das Positionsmeßsystem 74 gekoppelt ist, um eben für eine Leitungsverbindung zu sorgen.

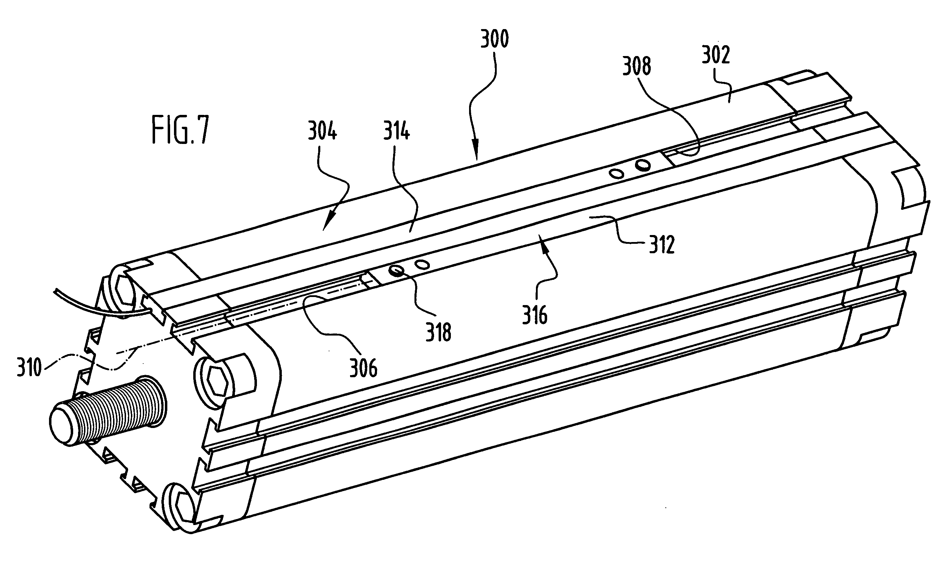

Bei einer Variante dieses Ausführungsbeispiels, welche in Figur 7 gezeigt ist, ist eine Fixierungseinrichtung 300 mittels eines Gehäuses 302 beispielsweise eines Pneumatikzylinders gebildet. In dem Gehäuse 302 sind an einer Seite 304 eine erste Ausnehmung 306 und eine beabstandete zweite Ausnehmung 308 gebildet. Die beiden Ausnehmungen sind nutförmig bzw. rillenförmig ausgebildet und erstrecken sich jeweils in eine Längsrichtung 310.

Die beiden Ausnehmungen 306, 308 sind parallel zueinander beabstandet angeordnet.

In den beiden Ausnehmungen 306 und 308 läßt sich jeweils ein zugeordneter erster Wegaufnehmer 312 und zweiter Wegaufnehmer 314 halten. Insbesondere sind die beiden Wegaufnehmer 312 und 314 in ihre jeweiligen Ausnehmungen 306, 308 einschiebbar.

Vor der Fixierung sind sie in der Längsrichtung 310 in den jeweiligen Ausnehmungen 306, 308 verschieblich, so daß sie relativ zueinander positionierbar sind. Es lassen sich dann die beiden Wegaufnehmer 312 und 314 insbesondere so zueinander positionieren, daß ein Überlappungsbereich 316 gebildet ist. In dem Überlappungsbereich 316 sind die beiden Wegaufnehmer 312 und 314 gemeinsam feldbeaufschlagt, wenn sich der Magnetgeber des Pneumatikzylinders in dem zugeordneten Überlappungsraum befindet (wenn sich der Geber in dem Überlappungsraum am Überlappungsbereich 316 befindet, dann erfolgt eine Feldbeaufschlagung des Überlappungsbereiches).

In den Ausnehmungen 306 und 308 sind die entsprechenden Wegaufnehmer 312 beispielsweise über Verklemmung fixierbar, um insbesondere die Längsverschieblichkeit in den jeweiligen Ausnehmungen 306, 308 zu sperren. Dazu sind beispielsweise jeweilige Klemmelemente 318 vorgesehen.

Bei dem in Figur 7 gezeigten Ausführungsbeispiel sind die Ausnehmungen 306 und 308 so an die Wegaufnehmer 312 und 314 angepaßt, daß die Wegaufnehmer 312, 314 in die Ausnehmungen 306, 308 nur in Längsrichtung einschiebbar sind.

Es ist insbesondere auch vorgesehen, daß eine Oberseite von in den Ausnehmungen 306, 308 positionierten Wegaufnehmern 312, 314 nicht über die entsprechende Seite 304 des Gehäuses 302 hinausragt, d. h. daß die Wegaufnehmer 312, 314 bündig oder zurückgesetzt positioniert sind.

Die Fixierungseinrichtung 300 wird in Zusammenwirkung der Ausnehmungen 306, 308 mit einer Gehäuseausgestaltung der Wegaufnehmer 312, 314 und den Klemmelementen 318 gebildet.

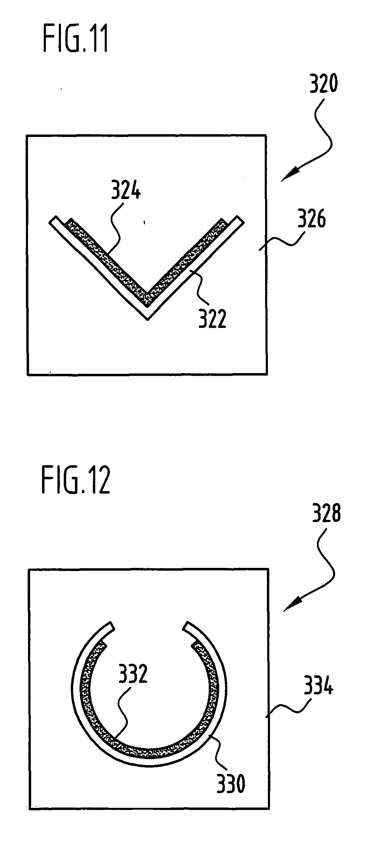

Es kann grundsätzlich vorgesehen sein, wie in den Figuren 11 und 12 schematisch angedeutet, daß ein Wegaufnehmer 320 (Figur 11) einen Träger 322 aus einem flexiblen Material wie beispielsweise einem Folienmaterial umfaßt. Eine Spule 324, welche beispielsweise dreiecksförmig wie oben beschrieben ausgestaltet ist, ist auf dem Träger 322 angeordnet. Beispielsweise ist die Spule 324 auf dem Träger 322 aufgedruckt.

Der Träger 322 mit der Spule 324 ist in einem Gehäuse 326 angeordnet.

Der Träger 322 mit der Spule 324 ist beispielsweise gebogen oder gefaltet, um so die Querabmessungen des Trägers 322 zu verringern. Dadurch läßt sich ein Wegaufnehmer mit verringerten Querabmessungen herstellen. Dadurch kann beispielsweise ein Wegaufnehmer in eine rillenförmige oder nutförmige Ausnehmung 306, 308 wie oben anhand der Figur 7 beschrieben gehalten werden.

Es ist auch möglich, wie in Figur 12 schematisch gezeigt, daß ein Wegaufnehmer 328 einen flexiblen Träger 330 mit einer darauf angeordneten Spule 332 umfaßt, wobei der Träger 330 gerollt ist. Diese Anordnung ist dann in einem Gehäuse 334 positioniert. Auch bei dieser Ausführungsform lassen sich die Querabmessungen des Wegaufnehmers 328 gering halten.

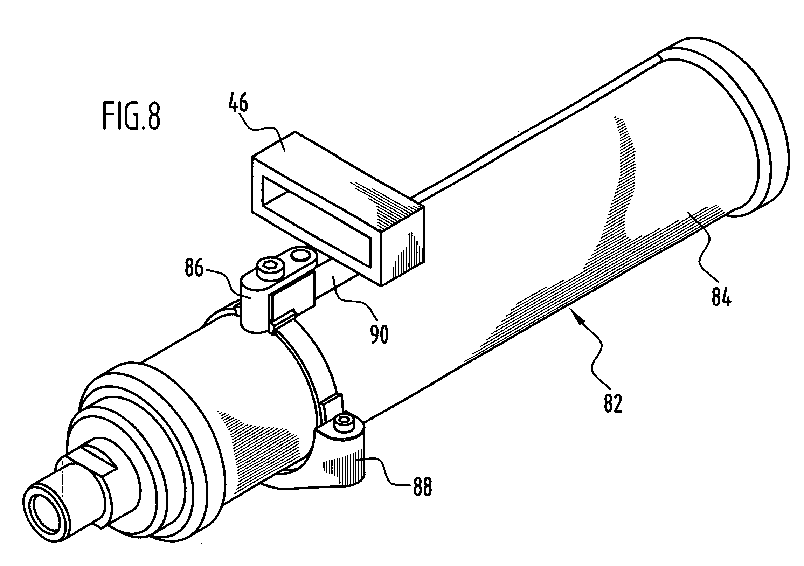

Ein weiteres Beispiel eines Pneumatikzylinders, welcher in Figur 8 gezeigt und dort als Ganzes mit 82 bezeichnet ist, umfaßt ein zylindrisches Gehäuse 84. An dem Gehäuse 84 sitzt ein Halter 86, welcher beispielsweise über eine Schelle 88 an dem Gehäuse 84 fixiert ist.

Dieser Halter 86 wiederum hält einen Adapter 90, beispielsweise über ein oder mehrere Formschlußelemente. Der Adapter 90 wiederum ist zur Fixierung eines Positionsmeßsystems 10 vorgesehen. Beispielsweise ist dazu die Fixierungseinrichtung 46 an dem Adapter 90 fixiert.

Der Adapter 90 kann auch einen Wegaufnehmer halten.

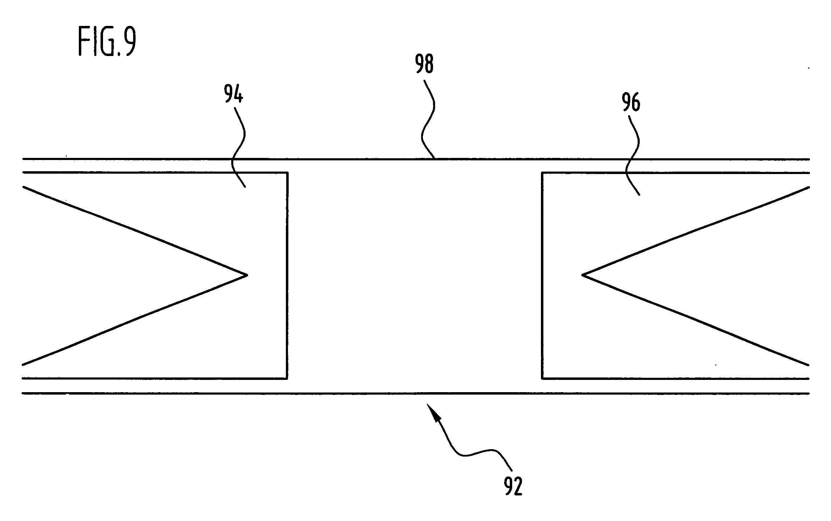

Bei einem zweiten Ausführungsbeispiel eines erfindungsgemäßen Positionsmeßsystems, welches in Figur 9 gezeigt und dort als Ganzes mit 92 bezeichnet ist, ist wiederum ein erster Wegaufnehmer 94 und ein zweiter Wegaufnehmer 96 vorgesehen, wobei die beiden Wegaufnehmer 94, 96 grundsätzlich so ausgebildet sind wie oben anhand der Wegaufnehmer 14 und 16 beschrieben. Die Wegaufnehmer 94, 96 sind in einem Gehäuse 98 angeordnet, das offen oder geschlossen sein kann. Es muß dafür gesorgt sein, daß der Geber 12 an die Wegaufnehmer 94, 96 koppeln kann.

Die beiden Wegaufnehmer 94, 96 sind in dem Gehäuse 98 fixierbar verschieblich, um den Meßbereich einzustellen. Insbesondere kann eine Überlappung wie oben beschrieben vorgesehen sein.

Das Gehäuse 98 kann dabei ablängbar ausgebildet sein.

Es kann vorgesehen sein, daß sowohl der erste Wegaufnehmer 94 als auch der zweite Wegaufnehmer 96 getrennt in dem Gehäuse 98 gehalten sind, wobei mindestens einer der beiden Wegaufnehmer relativ zum anderen Wegaufnehmer verschieblich ist.

Es kann auch vorgesehen sein, daß nur ein Wegaufnehmer an dem Gehäuse 98 gehalten ist, während der andere Wegaufnehmer über eine Fixierungseinrichtung wie sie oben beschrieben wurde (Fixierungseinrichtung 46) an dem anderen Wegaufnehmer gehalten ist. Im ersteren Falle bildet das Gehäuse 98 die Fixierungseinrichtung.

Das Gehäuse 98 kann beispielsweise als Profilgehäuse ausgebildet sein, welches Führungen für mindestens einen Wegaufnehmer 94, 96 aufweist.

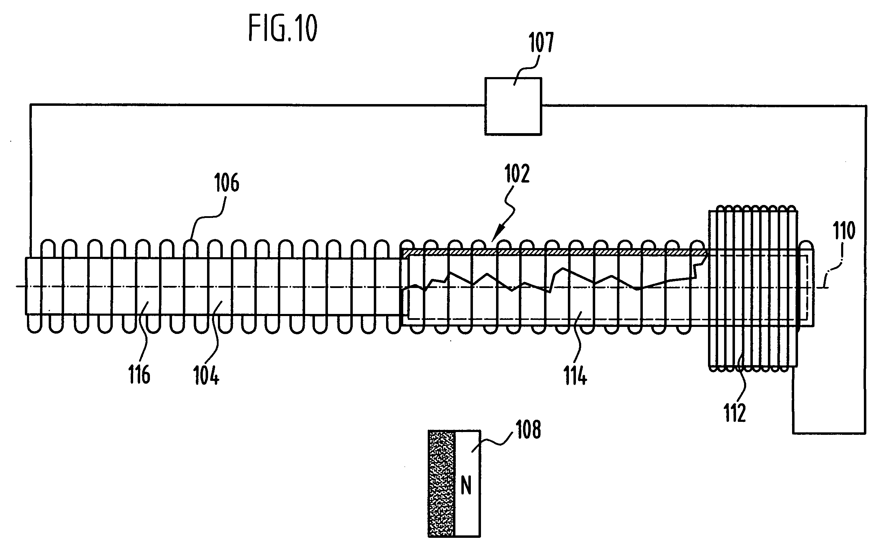

Bei einem dritten Ausführungsbeispiel eines erfindungsgemäßen Positionsmeßsystems, welches in Figur 10 gezeigt und dort als Ganzes mit 102 bezeichnet ist, ist ein weichmagnetischer Kern 104 vorgesehen. Um den weichmagnetischen Kern 104 ist eine Meßspule 106 gewickelt, welche wiederum in einen Schwingkreis 107 integriert ist.

Als Geber 108 wirkt ein Magnet, welcher bezogen auf die Meßspule 106 axial magnetisiert ist, das heißt die Magnetisierungsrichtung des Gebers 108 ist im wesentlichen parallel zur Längsrichtung 106.

Der Kern 104 mit der umwickelten Spule 106 erstreckt sich in einer Längsrichtung 110. Zu der Meßspule 106 ist eine Referenzspule 112 in Reihe geschaltet.

Der Kern 104, welcher insbesondere aus einem Ferritmaterial hergestellt ist und dünn ausgebildet ist, beispielsweise als flacher Streifen, weist eine definierte Magnetisierung auf. Durch den Gebermagneten 108 wird in Abhängigkeit von dessen Stellung in der Längsrichtung 110 die Magnetisierung beeinflußt. Dies wiederum beeinflußt den Schwingkreis 107. Diese Beeinflussung bewirkt eine Dämpfung, eine Phasenverschiebung und eine Änderung der Schwingkreisfrequenz. Aus dieser Änderung kann die Position des Gebermagneten 108 in der Längsrichtung 110 bezogen auf den Kern 104 abgelesen werden, das heißt, es kann die Position des Gebers 108 in der Längsrichtung 110 ermittelt werden.

Erfindungsgemäß ist es nun vorgesehen, daß der Kern 104 mehrteilig ausgebildet ist. Bei dem in Figur 10 gezeigten Ausführungsbeispiel ist der Kern 104 zweiteilig ausgebildet. Er umfaßt ein erstes Kernteil 114, welches als erster Wegaufnehmer wirkt. Ein zweites Kernteil 116 wirkt als zweiter Wegaufnehmer zumindest gemeinsam mit der Meßspule 106 (die sich über beide Kernteile 114 und 116 erstreckt).

Die beiden Kernteile 114 und 116 sind relativ zueinander verschieblich, um den Meßbereich in der Längsrichtung 110 einzustellen. Beispielsweise weist der erste Kernteil 114 eine Ausnehmung auf, in welcher das zweite Kernteil 116 eintaucht. Die beiden Kernteile 114 und 116 sind relativ zueinander über eine Fixierungseinrichtung fixierbar.

Über die Einstellung der relativen Position der beiden Kernteile 114 und 116 läßt sich der Meßbereich einstellen.

Die Meßspule 106 ist um den gesamten Kern 104 mit den beiden Kernteilen 114 und 116 umwickelt. Wenn ein Meßbereich durch die relative Position der beiden Kernteile 114 und 116 eingestellt ist, dann wird eine entsprechende Meßspule 106 verwendet, um die beiden Kernteile 114 und 116 zu umgeben und sich über die Länge des Kerns 104 zu erstrecken. Es kann auch eine ablängbare Meßspule vorgesehen sein, welche dann auf die Länge des Kerns 104 entsprechend der relativen Position der beiden Kernteile 114 und 116 abgelängt wird.

Alternativ ist es möglich, mehrere Meßspulen vorzusehen, die entsprechend in Reihe geschaltet sind. Die Anzahl der Meßspulen bestimmt die Länge der Spulenanordnung; diese Länge ist durch Wahl der Anzahl einstellbar.

Über die relative Positionierung der beiden Kernteile 114 und 116 und entsprechende Anpassung der Meßspule 106 läßt sich auch bei dem Positionsmeßsystem 102 der Meßbereich einstellen. Insbesondere lassen sich die beiden Kernteile 114 und 116 teleskopartig relativ zueinander verschieben.

## Patentansprüche

1. Positionsmeßsystem, umfassend einen Geber (12; 108), einen ersten Wegaufnehmer (14; 114, 106; 312), an welchen der Geber (12; 108) berührungslos koppelt mit einer Kopplungsstärke, welche abhängig ist von der relativen Position zwischen dem ersten Wegaufnehmer (14; 114, 106; 312) und dem Geber (12; 108), einen zweiten Wegaufnehmer (16; 116, 106; 314), an den der Geber (12; 108) berührungslos mit ortsabhängiger Kopplungsstärke koppelt, und eine Fixierungseinrichtung (46; 98; 300) zur Fixierung des ersten Wegaufnehmers (14; 114, 106; 312) und des zweiten Wegaufnehmers (16; 116, 106; 314) relativ zueinander, so daß sich der Meßbereich des Positionsmeßsystems über den ersten Wegaufnehmer (14; 114, 106; 312) und den zweiten Wegaufnehmer (16; 116, 106; 314) erstreckt.

2. Positionsmeßsystem nach Anspruch 1, **dadurch gekennzeichnet, daß** der erste Wegaufnehmer (14; 114, 106) und der zweite Wegaufnehmer (16; 116, 106) durch die Fixierungseinrichtung (46) miteinander fixierbar sind.

3. Positionsmeßsystem nach Anspruch 1 oder 2, **dadurch gekennzeichnet, daß** der erste Wegaufnehmer (14; 114, 106; 312) und der zweite Wegaufnehmer (16; 116, 106; 314) derart relativ zueinander fixierbar sind, daß der Meßbereich des Positionsmeßsystems einstellbar ist.

4. Positionsmeßsystem nach einem der vorangehenden Ansprüche, **dadurch gekennzeichnet, daß** der erste Wegaufnehmer (14; 114, 106; 312) und der zweite Wegaufnehmer (16; 116, 106; 314) feststellbar verschieblich zueinander sind.

5. Positionsmeßsystem nach einem der vorangehenden Ansprüche, **gekennzeichnet durch** eine Ablängbarkeit **durch** Einstellbarkeit der relativen Position zwischen dem ersten Wegaufnehmer (14; 114, 106; 312) und dem zweiten Wegaufnehmer (16; 116, 106; 314).

6. Positionsmeßsystem nach einem der vorangehenden Ansprüche, **dadurch gekennzeichnet, daß** der erste Wegaufnehmer (14; 312) und der zweite Wegaufnehmer (16; 314) einen Überlappungsbereich (44; 316) im Positionsmeßsystem aufweisen.

7. Positionsmeßsystem nach Anspruch 6, **dadurch gekennzeichnet, daß** die Größe des Überlappungsbereichs (44; 316) einstellbar ist.

8. Positionsmeßsystem nach einem der vorangehenden Ansprüche, **dadurch gekennzeichnet, daß** die Fixierungseinrichtung (46) den ersten Wegaufnehmer (14) und den zweiten Wegaufnehmer (16) kraftschlüssig miteinander fixiert.

9. Positionsmeßsystem-nach einem der vorangehenden Ansprüche, **dadurch gekennzeichnet, daß** die Fixierungseinrichtung (46) den ersten Wegaufnehmer (14) und den zweiten Wegaufnehmer (16) umgreift.

10. Positionsmeßsystem nach einem der vorangehenden Ansprüche, **dadurch gekennzeichnet, daß** die Fixierungseinrichtung (46) ein elastisches Element umfaßt, mittels welchem der erste Wegaufnehmer (14) und der zweite Wegaufnehmer (16) miteinander verklemmbar sind.

11. Positionsmeßsystem nach einem der vorangehenden Ansprüche, **dadurch gekennzeichnet, daß** die Fixierungseinrichtung (46) aus einem elektrisch isolierenden Material hergestellt ist.

12. Positionsmeßsystem nach einem der vorangehenden Ansprüche, **dadurch gekennzeichnet, daß** die Fixierungseinrichtung (98; 300) so ausgebildet ist, daß sie den ersten Wegaufnehmer (94; 312) hält und/oder den zweiten Wegaufnehmer (96; 314) hält.

13. Positionsmeßsystem nach einem der vorangehenden Ansprüche, **dadurch gekennzeichnet, daß** die Fixierungseinrichtung (300) ein Gehäuse (98; 302) umfaßt, in dem der erste Wegaufnehmer (94; 312) und/oder der zweite Wegaufnehmer (96; 314) gehalten sind.

14. Positionsmeßsystem nach Anspruch 13, **dadurch gekennzeichnet, daß** die Fixierungseinrichtung (300) mindestens eine Ausnehmung (306, 308) am Gehäuse (302) zum Halten eines Wegaufnehmers (312; 314) umfaßt.

15. Positionsmeßsystem nach einem der Ansprüche 12 bis 14, **dadurch gekennzeichnet, daß** die Fixierungseinrichtung (300) eine erste Ausnehmung (306) an einem Gehäuse (302) zum Halten des ersten Wegaufnehmers (312) und eine zweite Ausnehmung (308) an dem Gehäuse (302) zum Halten des zweiten Wegaufnehmers (314) umfaßt.

16. Positionsmeßsystem nach Anspruch 15, **dadurch gekennzeichnet, daß** die erste Ausnehmung (306) und die zweite Ausnehmung (308) parallel angeordnet sind.

17. Positionsmeßsystem nach einem der Ansprüche 14 bis 16, **dadurch gekennzeichnet, daß** die mindestens eine Ausnehmung (306; 308) als Nut ausgebildet ist, in welcher der zugeordnete Wegaufnehmer (312; 314) fixierbar ist.

18. Positionsmeßsystem nach einem der Ansprüche 14 bis 17, **dadurch gekennzeichnet, daß** die mindestens eine Ausnehmung (306; 308) und der zugeordnete Wegaufnehmer (312; 314) so aneinander angepaßt ausgebildet sind, daß der Wegaufnehmer (312; 314) in der Ausnehmung (306; 308) vor der Fixierung längsverschieblich ist.

19. Positionsmeßsystem nach einem der vorangehenden Ansprüche, **dadurch gekennzeichnet, daß** der zweite Wegaufnehmer (16) auf dem ersten Wegaufnehmer (14) positioniert ist.

20. Positionsmeßsystem nach einem der vorangehenden Ansprüche, **dadurch gekennzeichnet, daß** eine Längsachse (28; 310) des ersten Wegaufnehmers (14; 312) und eine Längsachse (30) des zweiten Wegaufnehmers (16; 314) parallel sind.

21. Positionsmeßsystem nach einem der vorangehenden Ansprüche, **dadurch gekennzeichnet, daß** der erste Wegaufnehmer (14; 312) und der zweite Wegaufnehmer (16; 314) jeweils ein oder mehrere sensitive Elemente (32; 34) umfassen, welche örtlich variierend ausgebildet sind.

22. Positionsmeßsystem nach einem der vorangehenden Ansprüche, **dadurch gekennzeichnet, daß** der erste Wegaufnehmer (14; 312) und der zweite Wegaufnehmer (16; 314) jeweils einen wirksamen Sensorbereich aufweisen, welcher quer zu einer Abstandsrichtung (50) zwischen dem Geber (12) und dem jeweiligen Wegaufnehmer (14; 16; 312; 314) variiert.

23. Positionsmeßsystem nach Anspruch 22, **dadurch gekennzeichnet, daß** der wirksame Sensorbereich quer zu einer Längsrichtung (28, 30; 310) der jeweiligen Wegaufnehmer (14; 16; 312; 314) variiert.

24. Positionsmeßsystem nach einem der vorangehenden Ansprüche, **dadurch gekennzeichnet, daß** der erste Wegaufnehmer (14; 312) und der zweite Wegaufnehmer (16; 314) jeweils mindestens ein induktives Element (32; 34) als sensitives Element umfassen.

25. Positionsmeßsystem nach Anspruch 24, **dadurch gekennzeichnet, daß** das mindestens eine induktive Element (32; 34) als Flachspule auf einem Träger (18) angeordnet ist.

26. Positionsmeßsystem nach Anspruch 25, **dadurch gekennzeichnet, daß** der Träger eine Platine (18) umfaßt.

27. Positionsmeßsystem nach Anspruch 25, **dadurch gekennzeichnet, daß** der Träger (322; 330) flexibel ist.

28. Positionsmeßsystem nach Anspruch 27, **dadurch gekennzeichnet, daß** der Träger (322; 330) zur Bildung des Wegaufnehmers gebogen, gefaltet oder gerollt ist.

29. Positionsmeßsystem nach einem der Ansprüche 24 bis 28, **dadurch gekennzeichnet, daß** das mindestens eine induktive Element (32; 34) dreieckförmig ausgestaltet ist.

30. Positionsmeßsystem nach Anspruch 29, **dadurch gekennzeichnet, daß** der erste Wegaufnehmer (14; 312) und der zweite Wegaufnehmer (16; 314) im Bereich von Dreieckspitzen ihrer jeweiligen induktiven Elemente (32; 34) überlappen.

31. Positionsmeßsystem nach einem der Ansprüche 24 bis 30, **dadurch gekennzeichnet, daß** der erste Wegaufnehmer (14) und der zweite Wegaufnehmer (16) so relativ zueinander fixiert sind, daß ihre jeweiligen induktiven Elemente (32, 34) einander zugewandt sind.

32. Positionsmeßsystem nach Anspruch 31, **dadurch gekennzeichnet, daß** zwischen den induktiven Elemente (32, 34) verschiedener Wegaufnehmer mindestens eine elektrische Isolierungsschicht angeordnet ist.

33. Positionsmeßsystem nach einem der Ansprüche 1 bis 21, **gekennzeichnet durch** einen weichmagnetischen Kern (104), um welchen mindestens eine Meßspule (106) gewickelt ist.

34. Positionsmeßsystem nach Anspruch 33, **dadurch gekennzeichnet, daß** eine Referenzspule (112) in Reihe gekoppelt ist.

35. Positionsmeßsystem nach Anspruch 33 oder 34, **dadurch gekennzeichnet, daß** die Meßspule (106) in einen Schwingkreis (107) integriert ist.

36. Positionsmeßsystem nach einem der Ansprüche 33 bis 35, **dadurch gekennzeichnet, daß** der Geber (108) einen bezogen auf die Meßspule (106) axial magnetisierten Magneten umfaßt.

37. Positionsmeßsystem nach einem der Ansprüche 33 bis 36, **dadurch gekennzeichnet, daß** der weichmagnetische Kern (104) mehrteilig ausgebildet ist mit mindestens einem ersten Kernteil (114) als ersten Wegaufnehmer und einem zweiten Kernteil (116) als zweiten Wegaufnehmer, wobei die Kernteile (114; 116) relativ zueinander positionierbar sind.

38. Positionsmeßsystem nach einem der vorangehenden Ansprüche, **dadurch gekennzeichnet, daß** eine Auswertungselektronik (48a; 48b) auf einem Träger (18) für ein sensitives Element (32; 34) angeordnet ist.

39. Positionsmeßsystem nach einem der Ansprüche 1 bis 37, **dadurch gekennzeichnet, daß** eine Auswertungselektronik außerhalb eines Trägers (18) für ein sensitives Element (32; 34) angeordnet ist.

40. Positionsmeßsystem nach einem der Ansprüche 21 bis 31, **dadurch gekennzeichnet, daß** mindestens ein Wegaufnehmer (14; 16) mit einer magnetisch sättigbaren Schicht versehen ist.

41. Positionsmeßsystem nach Anspruch 40, **dadurch gekennzeichnet, daß** die magnetisch sättigbare Schicht aus einem elektrisch leitenden Material hergestellt ist.

42. Positionsmeßsystem nach Anspruch 40 oder 41, **dadurch gekennzeichnet, daß** die magnetisch sättigbare Schicht mittels einer Folie gebildet ist.

43. Positionsmeßsystem nach einem der Ansprüche 38 bis 42, **dadurch gekennzeichnet, daß** die magnetisch sättigbare Schicht auf einer dem anderen Wegaufnehmer zugewandten Seite (20) und/oder abgewandten Seite (22) angeordnet ist.

44. Positionsmeßsystem nach einem der Ansprüche 24 bis 43, **dadurch gekennzeichnet, daß** ein Träger (18) auf der dem anderen Wegaufnehmer abgewandten Seite mit einer Metallschicht versehen ist.

45. Positionsmeßsystem nach einem der Ansprüche 24 bis 44, **dadurch gekennzeichnet, daß** das mindestens eine induktive Element (32, 34) aus einem magnetisch leitenden und elektrisch leitenden Material hergestellt ist.

46. Positionsmeßsystem nach einem der vorangehenden Ansprüche, **dadurch gekennzeichnet, daß** mindestens ein weiterer Wegaufnehmer vorgesehen ist, welcher mit einer Fixierungseinrichtung an einem benachbarten Wegaufnehmer fixiert ist.

47. Positionsmeßsystem nach einem der vorangehenden Ansprüche, **gekennzeichnet durch** einen Halter (72; 86) zur Fixierung des Positionsmeßsystems an einer Anwendung (66; 82).

48. Positionsmeßsystem nach Anspruch 47, **dadurch gekennzeichnet, daß** ein Adapter (76; 90) für das Positionsmeßsystem vorgesehen ist, mittels welchem dieses sich an dem Halter (72; 86) fixieren läßt.

49. Positionsmeßsystem nach Anspruch 47 oder 48, **dadurch gekennzeichnet, daß** das Positionsmeßsystem über die Fixierungseinrichtung (46) an dem Halter (86) fixierbar ist.

50. Positionsmeßsystem nach Anspruch 47 oder 48, **dadurch gekennzeichnet, daß** das Positionsmeßsystem über einen Wegaufnehmer an dem Halter (72) fixierbar ist.

51. Verwendung eines Positionsmeßsystems gemäß einem der vorangehenden Ansprüche für die Positionsmessung an einem Pneumatikzylinder.

52. Pneumatikzylinder, welcher mit einem Positionsmeßsystem (10) gemäß einem der vorangehenden Ansprüche versehen ist.

53. Pneumatikzylinder nach Anspruch 52, **dadurch gekennzeichnet, daß** das Positionsmeßsystem (10) an einem Gehäuse (58) des Pneumatikzylinders angeordnet ist.

54. Pneumatikzylinder nach Anspruch 53, **dadurch gekennzeichnet, daß** das Positionsmeßsystem (10) in einer oder mehreren Gehäusenuten (64) angeordnet ist.

55. Pneumatikzylinder nach Anspruch 52, **dadurch gekennzeichnet, daß** das Positionsmeßsystem (10) innerhalb eines Gehäuses (58) des Pneumatikzylinders angeordnet ist.
